(19) Europäisches Patentamt / European Patent Office / Office européen des brevets

(11) **EP 2 705 521 B1**

(12) **EUROPÄISCHE PATENTSCHRIFT**

(45) Veröffentlichungstag und Bekanntmachung des Hinweises auf die Patenterteilung:
**23.06.2021   Patentblatt 2021/25**

(21) Anmeldenummer: **12721220.7**

(22) Anmeldetag: **03.05.2012**

(51) Int Cl.:
*H01F 38/14* *(2006.01)*

(86) Internationale Anmeldenummer:
**PCT/EP2012/058103**

(87) Internationale Veröffentlichungsnummer:
**WO 2012/150293 (08.11.2012 Gazette 2012/45)**

(54) **ANORDNUNG UND VERFAHREN ZUR KONTAKLOSEN ENERGIEÜBERTRAGUNG MIT EINER KOPPLUNGSMINIMIERTEN MATRIX AUS PLANAREN SENDESPULEN**

ARRANGEMENT AND METHOD FOR CONTACTLESS ENERGY TRANSMISSION WITH A COUPLING-MINIMIZED MATRIX OF PLANAR TRANSMISSION COILS

SYSTÈME ET PROCÉDÉ DESTINÉS À LA TRANSMISSION D'ÉNERGIE SANS CONTACT AU MOYEN D'UNE MATRICE DE BOBINES D'ÉMISSION PLANAIRES DONT LE COUPLAGE EST RÉDUIT AU MINIMUM

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.05.2011   DE 102011100368**

(43) Veröffentlichungstag der Anmeldung:
**12.03.2014   Patentblatt 2014/11**

(73) Patentinhaber: **Phoenix Contact GmbH & Co. KG**
**32825 Blomberg (DE)**

(72) Erfinder:
• **SCHOLZ, Peter-Dominik**
**32683 Barntrup (DE)**

• **GALLIARDT, Artjom**
**55435 Gau-Algesheim (DE)**

(74) Vertreter: **Blumbach · Zinngrebe Patentanwälte PartG mbB**
**Alexandrastraße 5**
**65187 Wiesbaden (DE)**

(56) Entgegenhaltungen:

| | |
|---|---|
| WO-A1-2007/031897 | WO-A1-2008/032746 |
| GB-A- 2 389 720 | GB-A- 2 446 305 |
| US-A1- 2008 067 874 | US-A1- 2008 067 874 |
| US-A1- 2011 050 382 | |

**Beschreibung**

GEBIET DER ERFINDUNG

Die Erfindung betrifft eine Anordnung zur kontaktlosen Energieübertragung mit einer kopplungsminimierten Matrix aus planaren Sendespulen.

HINTERGRUND

Kontaktlose Energieübertragungssysteme auf Basis von Induktion sind allgemein bekannt. Grundsätzlich geht es dabei darum, mittels eines zeitlich veränderlichen Stromflusses durch eine oder mehrere Sende- oder Primärspulen (auch als Spulen, Leiterschleifen, Windungen, Antennen oder stromführende Leiter bekannt) auf Basis des Induktionsprinzips Spannung in einer oder mehreren relativ nah positionierten Empfangs- oder Sekundärspulen zu erzeugen. Die so induzierte zeitlich veränderliche Spannung in der Empfangsspule kann dann zum Beispiel gleichgerichtet und dazu verwendet werden, einen elektronischen Schaltkreis mit Leistung zu versorgen und/oder eine Batterie zu laden. Zahlreiche Anwendungen hierfür finden sich unter anderem in der Unterhaltungselektronik, wobei hier mobile Geräte, wie zum Beispiel Laptops oder Smartphones mit mindestens einer integrierten Empfangsspule ausgestattet sind und auf einer mit einer oder mehreren Sendespulen ausgestatteten Oberfläche, wie beispielsweise einer Tischauflage, angeordnet zu werden, um über diese induktiv mit Energie versorgt zu werden. Auf diese Art und Weise werden dann beispielsweise die Akkus oder Batterien des mobilen Geräts geladen. Weitere Anwendungen, die das Induktionsprinzip einsetzen, sind beispielsweise Radiofrequenzidentifikationssysteme (RFID).
In einigen Anwendungsfällen der kontaktlosen Energieübertragung ist es vorteilhaft, wenn die Sendespule oder mehrere Sendespulen in einer planaren Einheit integriert sind. Hierfür kommen beispielsweise dünn gewickelte, gedruckte oder geätzte Spulen auf oder in einem mehrlagigen Träger, wie beispielsweise einer Leiterplatte (PCB) in Betracht. Eine derartige planare Einheit kann dann in sehr vielfältiger Art und Weise in das alltägliche Umfeld, wie beispielsweise Wände, Böden, Schubladen, Tische etc., integriert werden.
Die räumlich benachbarten Spulen, eine oder mehrere Sendespulen und die Empfangsspule bilden eine transformatorische Kopplung. Diese besitzt allerdings gegenüber herkömmlichen Transformatoren keinen Kern oder zumindest keinen geschlossenen Kern. Somit ist es generell möglich, unterschiedlich geformte magnetische Feldverteilungen zu generieren und damit einhergehend auch verschiedene magnetische Feldkomponenten für die Induktion zu verwenden. Bezogen auf die planare Einheit werden die horizontale Feldkomponente (parallel zur Fläche der planaren Einheit) oder die vertikalen Feldkomponenten (parallel zum normalen Vektor der planaren Einheit), bezogen auf die planare Einheit, zur Energieübertragung verwendet. Derartige Systeme sind beispielsweise aus der US 2008/0116847, US 2003/0210106 und US 7 633 263 bekannt. Außerdem besteht die Möglichkeit, durch eine geeignete Verschaltung mehrerer Empfangsspulen beide Feldkomponenten (horizontal und vertikal) auszunutzen. Dies ist beispielsweise in US 2009/0303749 beschrieben.
Im Fall der vertikalen Feldkomponente können in einem Anwendungsfall zwei identische Leiterschleifen (Sende- und Empfangsspule), die parallel und koaxial angeordnet sind, dazu verwendet werden, bei geringem Abstand (sehr viel kleiner als die Abmessungen der Leiterschleifen) mit einer hohen Kopplung die Leistung zu übertragen. Als Kopplung zweier Spulen (charakterisiert durch die beiden Eigeninduktivitäten L1 und L2) wird in diesem Zusammenhang im Wesentlichen der Kopplungsfaktor k verwendet, der das Verhältnis aus Gegeninduktivität M und der Quadratwurzel des Produkts beider Eigeninduktivitäten bezeichnet. Dies wird ausgedrückt als

$$k = M/\sqrt{L1 \cdot L2}$$

Aufgrund der Tatsache, dass auch andere physikalische Effekte, wie zum Beispiel kapazitive Kopplung zwischen Leiterbahnen, zu berücksichtigen sind, die durch die oben genannte Eigen- und Gegeninduktivität nicht ausreichend beschrieben werden, bezeichnet der Begriff "Kopplung" im Kontext dieser Anmeldung die elektromagnetische Kopplung zwischen zwei Spulen unter Berücksichtigung aller physikalisch relevanten Effekte. Die Kopplung ist somit ein Maß für die Güte der Übertragungsstrecke und erstreckt sich betragsmäßig von 0 (Spulen nicht gekoppelt) bis 1 (Spulen maximal gekoppelt). Definitionsgemäß ist die Kopplung zwischen zwei Spulen eine symmetrische Größe, was bedeutet, dass die Kopplung von der ersten zur zweiten Spule identisch zu der Kopplung von der zweiten zur ersten Spule ist. In diesem Zusammenhang wird synonym zur Kopplung oder gegenseitigen Kopplung ebenfalls der Begriff der Gegenkopplung verwendet.
Wenn zwei identische Leiterschleifen als Primär- und Sekundärspule verwendet werden, hängt die Kopplung stark von der relativen Position der beiden Spulen ab. So wird beispielsweise die ursprünglich hohe Kopplung nicht mehr aufrechterhalten, wenn sich der Abstand beider Spulen vergrößert oder eine der beiden Spulen seitlich verschoben wird. In vielen Anwendungen ist es jedoch wünschenswert, eine relativ positionsunabhängige Kopplung und damit einhergehend eine positionsunabhängige Funktionalität zu gewährleisten.

Die Aufgabe, auf einer größeren planaren Fläche ein möglichst homogenes Feld zu erzeugen und damit eine möglichst homogene Kopplung zu erreichen, wird gemäß dem Stand der Technik beispielsweise dadurch gelöst, dass die Größe der Sende- und Empfangsspule unterschiedlich gewählt wird. Dies verringert zwar zunächst die maximal erreichbare Kopplung, lässt jedoch bei geschicktem Entwurf mit einer spiralförmigen Sendespule, wie beispielsweise in US 2008/0278112 beschrieben, einen größeren horizontalen Bereich einer relativ homogenen Kopplung zu. Dies ermöglicht außerdem einen relativ einfachen Systementwurf. Als Alternative hierzu haben sich periodische parallel- oder in Reihe geschaltete Antennenstrukturen als zweckdienlich erwiesen, wie sie beispielsweise in US 2005/0189910 oder US 7 164 255 offenbart sind. Viele kleine Sendespulen werden dort auf einer oder mehreren Lagen der planaren Einheit zu einer virtuellen großen Sendespule derart zusammengeschaltet, dass sich ein möglichst homogenes magnetisches Feld ergibt und sich somit auch eine (über der planaren Einheit) homogene Kopplung zu einer möglicherweise vorhandenen Empfangsspule einstellt.

Ein Nachteil dieser Anordnungen besteht darin, dass sich in der näheren Umgebung der großen beziehungsweise virtuell großen Sendespule unerwünscht große elektromagnetische Streufelder einstellen können, auch wenn sich dort kein Empfänger befindet. Dies ist sowohl aus Gründen der elektromagnetischen Verträglichkeit (EMV) sowie der elektromagnetischen Umweltverträglichkeit (EMVU), insbesondere aus Sicherheitsaspekten, bezogen auf die Interaktion mit menschlichem Gewebe und möglicher Gesundheitsgefährdung, nachteilig.

Die Problematik der unerwünschten elektromagnetischen Streufelder kann umgangen werden, wenn die Größe der Sendespulen klein in Bezug auf die Größe der Empfangsspulen gewählt wird. Werden nunmehr nur diejenigen Sendespulen aktiviert, die sich räumlich in unmittelbarer Nähe zu einer Empfangsspule befinden, und werden die Spulen mithilfe von abschirmend wirkenden .Materialien wie beispielsweise Ferriten umgeben, so können die elektromagnetischen Streufelder weitestgehend minimiert werden.

Derartige Ansätze und Lösungen sind aus US 2007/0182367, US 7 262 700, US 7 521 890, US 2009/023719 A1, US 2010/0314946, US 2010/0328044, US 2011/0025133 und US 7 893 568 bekannt. Hier werden Felder (Arrays) von schaltbaren Sendespulen auf einer planaren Einheit offenbart, die einzeln geschaltet werden können. Neben der relativen Positionierung und Anordnung der Felder von Spulen spielt in den genannten Schriften auch die Fragestellung der adäquaten Aktivierung und Ansteuerung der einzelnen Spulen eine große Rolle. Dieser Aspekt ist jedoch nicht Gegenstand der vorliegenden Erfindung.

Vorteil dieser Technik ist, dass mehrere Empfangsspulen relativ einfach versorgt werden können, weil nur die jeweils am nächsten positionierte Sendespule eingeschaltet und mit Leistung versorgt wird. Darüber hinaus lässt sich die vorgenannte Lösung relativ einfach in ihrer Größe skalieren, indem die planare Einheit zum Beispiel durch Hinzunahme weiterer Sendespulen vergrößert wird. Maßgeblicher Nachteil dieser Lösungen besteht jedoch darin, dass für jede Sendespule eine geeignete Schaltvorrichtung bereitgestellt werden muss, was die Komplexität der Anordnung bzw. der damit verbundenen Elektronik und damit die Kosten erhöht.

Aus WO 2007/031897 A1 ist eine Vorrichtung zum Wiederaufladen von Batterien bekannt, welche eine Schaltung mit einer ersten Spule in einer ersten Schicht und einer zweiten Spule in einer zweiten Schicht umfasst, wobei die Spulen magnetische Felder in entgegengesetzten Richtungen entwickeln.

US 2011/0050382 A1 beschreibt einen Flusskonzentrator mit spiralförmigen, sich in mehreren Ebenen überlappenden Spulen, sowie ein Verfahren zur Herstellung eines solchen Flusskonzentrators.

Aus WO 2008/032746 A1 ist eine folienartige Energiezuführung mit einer Mehrzahl von Spulen bekannt, wobei die Spulen in einer Matrix angeordnet sind.

In US 2008/067874 A1 wird ein Verfahren und ein System zur drahtlosen Energieübertragung für elektronische Geräte unter Ausnutzung der magnetischen Kopplung von Spulen beschrieben, wobei insbesondere eine Anordnung spiralförmiger Sendespulen vorgesehen ist, welche Energie an Empfängerspulen übertragen.

Ein planares induktives Batterieladegerät ist auch aus GB 2389720 A bekannt.

In GB 2446305 A wird ein Verfahren zur elektrischen Anregung einer mehrschichtigen planaren Primärwicklungsstruktur beschrieben, bei dem verschiedene Schichten unter verschiedenen Phasenwinkeln angeregt werden, wobei Spulen mit hexagonalen Windungen in einer wabenartigen Anordnung eingesetzt werden.

KURZZUSAMMENFASSUNG DER ERFINDUNG

Es ist eine Aufgabe der Erfindung eine Vorrichtung bereitzustellen, die es ermöglicht, gleichmäßig induktiv Energie an einen oder mehrere Empfänger zu übertragen, wobei die Position eines Empfängers relativ zum Sender innerhalb gewisser Grenzen möglichst geringen Einfluss auf die Effizienz der Übertragung der Energie hat.

Es ist außerdem eine Aufgabe der Erfindung, die Effizienz der induktiven Übertragung von Energie auch senderseitig insbesondere durch geometrische Optimierungen der Spulen zu optimieren.

Die Erfindung betrifft eine Anordnung zur kontaktlosen Energieübertragung mittels Induktion nach Anspruch 1. Die Anordnung umfasst eine Mehrzahl von Spulen. Die Spulen weisen mindestens einen Leiter auf, der mindestens ein Mal eine zentrale Achse der jeweiligen Spule in einer Windung umschließt. Natürlich können auch mehrere Windungen pro Spule vorliegen, die beispielsweise helix- und/oder spiralförmig ausgeprägt sein können. Im Kontext der vorliegenden Erfindung ist die zentrale Achse eine durch das Zentrum der Spule verlaufende Achse, um die herum sich die Windung oder die Windungen der Spule winden. Die zentrale Achse kann dann senkrecht auf der von dem Leiter mit in Form der Windung umschlossenen Fläche stehen. Die zentrale Achse kann im Zentrum oder dem geometrischen Flächenschwerpunkt der umschlossenen Fläche stehen. Der geometrische Flächenschwerpunkt dient hier zur Definition eines Mittelpunkts der geometrischen Gestaltung der Windung bzw. Windungen der Spulen. Diese geometrische Form spielt im Rahmen dieser Beschreibung eine wichtige Rolle. Je nach Ausgestaltung der Windungen der Spulen kann der Mittelpunkt dann mit dem Flächenschwerpunkt zusammenfallen und entsprechend synonym verwendet werden. Bei komplexen Spulenformen ist ein einfacher Mittelpunkt, wie bspw. bei einem Kreis nicht mehr zu definieren. Daher wird hier hilfsweise auch auf den geometrischen Flächenschwerpunkt Bezug genommen. Vereinfacht wird auf das Zentrum der Spule Bezug genommen, das wiederum je nach Spulengeometrie identisch oder weitgehend identisch mit dem Mittelpunkt oder dem geometrischen Flächenschwerpunkt sein kann. Dabei wird davon ausgegangen, dass diese Punkte innerhalb der Windungen liegen und sich mittig in der Spule befinden, wenn man diese entlang ihrer zentralen Achse betrachtet. Die Spulen können dann nebeneinander in einer flächigen Lage angeordnet sein. Diese wird im vorliegenden Kontext auch als planare Einheit bezeichnet. Die flache Lage oder planare Einheit kann, muss aber nicht eine geometrische Ebene sein. Die flache Lage, Ebene, oder planare Einheit erstreckt sich in einer ersten Dimension, in einer zweiten Dimension und in einer dritten

Dimension. Die Erstreckung der planaren Einheit in der ersten Dimension (Länge, X-Richtung) und in der zweiten Dimension (Breite, Y-Richtung) ist dann wesentlich größer ist als in der dritten Dimension (Dicke, Z-Richtung). Die zentrale Achse jeder Spule ist dann vorzugsweise mindestens lokal wenigstens nahezu senkrecht auf der von der ersten Dimension und der zweiten Dimension aufgespannten Fläche angeordnet (X-Y-Ebene). Mit anderen Worten liegen die zentralen Achsen der Spulen im Wesentlichen in Richtung der dritten Dimension, also in Z-Richtung, wenn X, Y und Z die Abszissen eines kartesischen Koordinatensystems sind.

Die Spulen können dann außerdem innerhalb der flächigen Lage derart regelmäßig in Zeilen und/oder Spalten angeordnet sein, dass eine Spule mindestens jeweils zwei oder drei unmittelbar benachbarte Spulen aufweist. Die Ausdehnung der Spulen in der dritten Dimension ist dabei deutlich kleiner als in der ersten und zweiten Dimension. Es handelt sich um planare Sendespulen. Bei einer Draufsicht entlang der zentralen Achsen der Spulen sind die Spulen dann matrixartig in Spalten und Zeilen angeordnet. Es gibt mindestens drei Sendespulen. In einer vorteilhaften Ausführung kann es mindestens zwei Spalten und/oder zwei Zeilen geben. Gemäß beispielhaften Ausgestaltungen kann es mindestens drei oder vier Spulen geben, wobei erfindungsgemäß mindestens vier Spulen vorgesehen sind, und wobei grundsätzlich auch mindestens zwei oder drei Spulen in einer Linie (Mittelpunkt auf einer Geraden) nebeneinander angeordnet sein können. Bei einer Anordnung mit vier Spulen können die unmittelbar benachbarten Spulen dann jeweils die drei weiteren Spulen sein. Liegen vier Spulen in einer Linie (1-Dimensionale Anordnung) hat eine Spule maximal zwei unmittelbare Nachbarspulen.

Die Abstände der Zentren oder geometrischen Flächenschwerpunkte der Spulen zueinander und die Form und die Ausdehnung der mindestens einen Windung je Spule sind dann so gewählt, dass für alle Paare von in der flächigen Lage unmittelbar benachbarten Spulen die gegenseitige Kopplung zwischen den jeweiligen Spulen minimal ist.

Durch diese Eigenschaft unterscheidet sich die vorliegende Erfindung von allen bekannten Anordnungen. Herkömmlicherweise wird bei derartigen flachen Anordnungen (bspw. flache Unterlage in Form einer Leiterplatte, eines Pads, oder Tisches etc.) in der Regel auf die Homogenität des erzeugten Feldes geachtet. Andere Lösungen versuchen die Übertragung von Energie und die weitgehende Positionsunabhängigkeit des Energieempfängers dadurch zu erreichen, dass die Sendespulen entsprechend der Position des Empfängers ein- bzw. ausgeschaltet werden. Die vorliegende Erfindung kann als eine Erweiterung dieser schaltbaren Sendespulen insofern interpretiert werden, als dass die einzelnen Sendespulen durch die gegenseitige minimierte Kopplung sowohl einzeln als auch beliebig kombinierbar gleichzeitig betrieben werden können um somit die benötigte Feldverteilung für eine effiziente Energieübertragung an eine oder mehrere Empfangsspulen bereitzustellen. Gleichzeitig kann auch die auf das räumliche Gebiet des Empfängers beschränkte Feldverteilung gewährleistet werden. Bei Lösungen gemäß des Standes der Technik könnten sich zwei gleichzeitig betriebene direkt benachbarte Sendespulen durch gegenseitige Kopplung derart stören, dass unter Umständen eine verminderte Systemfunktionalität die Folge sein könnte. Dies wird durch die vorliegende Erfindung vermieden. Allerdings muss dann die gegenseitige Kopplung der Sendespulen berücksichtigt werden. Erfindungsgemäß werden die Kopplungen der unmittelbar benachbarten Spulen optimiert (minimiert), da diese generell aufgrund der räumlichen Nähe am größten sind. Hierfür gibt es verschiedene Lösungen, die anhand nachfolgender Aspekte der Erfindung und anhand der Ausführungsbeispiele erläutert werden.

In realen Spulenanordnungen wird die paarweise Gegenkopplung zwischen einer Mehrzahl von flach nebeneinander angeordneten Spulen nicht komplett verhindert werden können. Des Weiteren können auch die Kopplungen von nicht unmittelbar benachbarten Paaren von Spulen nicht gänzlich vermieden werden. Daher geht es gemäß der vorliegenden Erfindung um eine Minimierung aller möglichen Kopplungen aller Spulen. Es hat sich gezeigt, dass für beispielhafte Ausführungsformen ein Minimum oder Optimum bei 5% (k unter Berücksichtigung aller weiteren erfassbaren Einflüssen gleich oder kleiner 0,05 für alle Paare von Spulen der Matrix) gefunden werden kann. Die Kopplung kann erfindungsgemäß bis etwa 1% (k unter Berücksichtigung aller weiteren erfassbaren Einflüsse gleich oder kleiner 0,01) reduziert werden. Dabei werden auch die Kopplungen von nicht unmittelbar benachbarten Paaren von Spulen berücksichtigt.

Der angegebene maximale Kopplungswert ist dann vorteilhaft das Maximum aller möglichen paarweisen Kopplungen. Für eine regelmäßige Anordnung von beispielsweise 6 Spulen führt dies zu einer Matrix, die wie folgt aussehen kann:

$$
k =
$$

| K11 | K12 | K13 | K14 | K15 | K16 |
|------|------|------|------|------|------|
| K21 | K22 | K23 | K24 | K25 | K26 |
| K31 | K32 | K33 | K34 | K35 | K36 |
| K41 | K42 | K43 | K44 | K45 | K46 |
| K51 | K52 | K53 | K54 | K55 | K56 |
| K61 | K62 | K63 | K64 | K65 | K66 |

Das Maximum kann an einer oder mehreren Positionen liegen. Beispielsweise könnte K62 gleich 1,34% sein. Der Grenzwert für die Kopplung kann bspw. 5%, 2% oder 1% betragen. Für einen Grenzwert von 5% oder von 2% hätte die Anordnung von Spulen, die durch die vorstehende Matrix beschrieben wird, dann die erfindungsgemäße Minimierung der Kopplung erreicht. K62 müsste dazu den (betragsmäßig) maximalen Kopplungswert der Matrix darstellen. Alle anderen Einträge der Matrix sind dann betragsmäßig kleiner als (oder gleich) K62. Die Matrix kann symmetrisch sein, wobei die Hauptdiagonaleinträge dann zu Null werden können, da eine Spule in dieser Definition der Kopplung nicht mit sich selbst koppelt bzw. ist diese Eigenschaft bereits in der Eigeninduktivität enthalten. In einer anderen Definition können die Werte der Hauptdiagonaleinträge auch Eins betragen, wenn in der Definition des Kopplungsfaktors die Gegeninduktivität bei diesen Elementen durch die Eigeninduktivität ersetzt wird. Die Einträge auf der Hauptdiagonalen sind für die nachfolgenden Ausführungen jedoch nicht von Bedeutung und können somit wahlweise Null oder Eins betragen.

Gemäß eines Aspektes der Erfindung kann die Mehrzahl von Spulen eine im Wesentlichen gleiche Form aufweisen. Das vereinfacht den Entwurf und die Optimierung der Spulenanordnung.

Die Zentren oder geometrischen Flächenschwerpunkte der Spulen können derart angeordnet sein, dass sie in der ersten Dimension auf einer ersten Gerade je Zeile liegen. Dann wären die Spulen flach nebeneinander so angeordnet, dass ihre Flächenschwerpunkte (oder Zentren bzw. Mittelpunkte) alle auf einer Geraden liegen. Die erste Dimension kann bspw. die Länge der flächigen Lage bzw. der planaren Einheit sein in der die Spulen liegen.

Die geometrischen Flächenschwerpunkte oder Mittelpunkte der Spulen können weiter derart angeordnet sein, dass sie in der zweiten Dimension auf einer zweiten Gerade je Spalte liegen. Insgesamt wird so eine regelmäßige Matrix von nebeneinander angeordneten Spulen erreicht. Dies erleichtert die Optimierung der Spulenanordnung weiter.

Je Zeile der Matrix gibt es eine erste Gerade, auf welcher sich die Flächenschwerpunkte bzw. Zentren oder Mittelpunkte der Spulen befinden. Je Spalte gibt es eine zweite Gerade, auf welcher sich die Flächenschwerpunkte bzw. Mittelpunkte der Spulen befinden.

Die (ersten) Geraden der Zeilen können dann parallel sein und die (zweiten) Geraden der Spalten können ebenfalls parallel zueinander sind.

Die Flächenschwerpunkte bzw. Mittelpunkte der Spulen können vorzugsweise in einem Raster angeordnet sein. Das Raster kann vorteilhaft regelmäßig sein.

Gemäß einer ersten, erfindungsgemäßen Ausgestaltung können sich die ersten Geraden (der Zeilen) und die zweiten Geraden (der Spalten) jeweils in einem rechten Winkel schneiden, sodass die Spulen nach Art eines Schachbrettmusters regelmäßig angeordnet sind.

Gemäß einer zweiten, beispielhaften Anordnung, die nicht Teil der Erfindung ist, können sich die ersten Geraden und die zweiten Geraden jeweils in einem Winkel ungleich 90° schneiden. Die Spulen der Matrix können dann nach Art einer Wabenstruktur angeordnet sein.

In einer weiteren bevorzugten Anordnung können sich die Windungen von unmittelbar benachbarten Paaren von Spulen jeweils paarweise überlappen. Dies führt dazu, dass die Spulen beispielsweise an einem Punkt bzw. in einem Bereich derart übereinander angeordnet sind, dass die Windungen von vier Spulen gleichzeitig eine Schnittfläche bilden. Dies ist eine weitere bevorzugte Maßnahme, um die Gegeninduktivität der Spulen zu optimieren.

In einer anderen Ausführung der Anordnung kann sich der Wicklungssinn mindestens einer Spule abschnittweise ändert. Hierbei wird die Windung der Spule so geführt, dass sie wenigstens für einen Abschnitt entgegen der ursprünglichen Wicklungsrichtung der Spule läuft und dann wieder auf den ursprünglichen Wicklungssinn zurückkehrt (es ergibt sich somit eine kleine Teilspule mit umgekehrten Wicklungssinn, deren Fläche innerhalb der Teilwicklung mit entgegengesetztem Wicklungssinn kleiner ist als die Fläche der Gesamtspule). Auch durch diese Maßnahme ist eine Optimierung der Kopplung möglich. Bei dieser Anordnung kann dann gegebenenfalls auf ein Überlappen der Windungen benachbarter Spulen und die Einbuchtungen der Windungen verzichtet werden.

Gemäß einiger Ausführungsbeispiele der Erfindung können sich die von der jeweils mindestens einen Windung jeder Spulen aufgespannten Flächen für jedes unmittelbar benachbarte Paar von Spulen jeweils paarweise überlappen. Auch dies führt dazu, dass beispielsweise bei einer schachbrettartigen Anordnung des Spulenfeldes die von den Spulen eingeschlossenen Flächen eine Schnittfläche bilden. Bei vier Spulen tritt dies einmal im Zentrum der Anordnung auf.

Weiterhin können die Spulen der Matrix innerhalb jeder Zeile und jeder Spalte periodisch mit jeweils paarweise gleichem Abstand angeordnet sein. Diese Maßnahme erleichtert ebenfalls die Optimierung der Anordnung.

Für den Fall einer Anordnung der Spulen nach Art eines Schachbrettmusters können sich dann die Windungen der Spulen vorteilhaft mindestens abschnittsweise lokal dem Zentrum und/oder geometrischen Flächenschwerpunkt der Spule annähern. Hierbei wird davon ausgegangen, dass die Windung der Spule den Umfang einer geometrischen Form durchläuft, die beispielsweise rechteckig, dreieckig oder polygon sowie rund oder abgerundet sein kann. Für den Fall eines Quadrats verlaufen die Windungen dann nicht genau auf den geradlinigen Verbindungen der Eckpunkte, sondern nähern sich zwischen aufeinanderfolgenden Eckpunkten mindestens abschnittsweise dem Zentrum stärker an als durch die geradlinige Verbindung zwischen den Eckpunkten vorgegeben. Dies kann in Form von rechtwinkligen Einbuchtungen oder zum Zentrum der Spule hin geneigten Streckenabschnitten erfolgen.

Gemäß einem Aspekt der Erfindung ist jede Spule derart ausgestaltet, dass ihre mindestens eine Windung an mindestens einem ersten, zweiten, dritten und/oder vierten Punkt einen maximalen Abstand zum geometrischen Flächenschwerpunkt oder Zentrum der Spule aufweist und wobei der erste, zweite, dritte und/oder vierte Punkt jeweils paarweise benachbarte Punkte entlang des von der mindestens einen Windung definierten Umfangs der Spule sind.

Die mindestens eine Windung jeder Spule nähert sich dann zwischen dem ersten und zweiten Punkt und dem zweiten und dritten Punkt mindestens abschnittsweise dem Flächenschwerpunkt oder Zentrum der Spule an. Hierdurch wird die Minimierung der wechselseitigen Gegeninduktivitäten der Spulen erleichtert. Maßgeblich ist, dass diese Annäherung zum Zentrum bzw. Flächenschwerpunkt der Spule mindestens an zwei aneinander angrenzenden Seiten der geometrischen Form erfolgt.

Der erste, zweite, dritte und vierte Punkt können die Ecken eines Rechtecks sein. In anderen Ausführungsbeispielen können sie die Ecken bzw. Eckpunkte eines Quadrats sein.

Die Anordnung in einer wabenartigen Struktur der Spulen kann dadurch erreicht werden, dass die Flächenschwerpunkte bzw. Zentren jeder Spule in jeder Zeile gegenüber den Flächenschwerpunkten bzw. Zentren der Spulen einer benachbarten Zeile hinsichtlich der ersten und/oder der zweiten Dimension versetzt sind. Hierdurch ergeben sich die wabenartigen Strukturen, bei denen die mindestens abschnittsweise Annäherung der Windungen der Spulen zum Flächenschwerpunkt bzw. Zentrum nicht zwangsläufig erforderlich ist. Die Flächenschwerpunkte der Spulen einer Zeile können mittig bezüglich der Flächenschwerpunkte der Spulen einer weiteren Zeile angeordnet sein.

Nicht Teil der beanspruchten Erfindung ist ein Verfahren zur Herstellung einer Anordnung einer Mehrzahl von Spulen in einer flächigen Lage bzw. planaren Einheit bereit, die zum kontaktlosen Übertragen von Energie mittels Induktion geeignet ist. Gemäß dieses Verfahrens werden die Spulen derart angeordnet und dimensioniert, dass die paarweise gegenseitige Kopplung zwischen den Spulen minimiert wird. Vorteilhaft wird hierbei lediglich die Gegeninduktivität von Spulenpaaren optimiert, die unmittelbar benachbart sind. Die vorhandene Gegeninduktivität zweier nicht direkt benachbarter Spulen kann hierbei als eine obere Schranke für die Optimierung der Gegeninduktivitäten der direkt benachbarten Spulen dienen. Für schachbrettartige Strukturen können sich die Spulen hierbei jeweils paarweise überlappen. Ebenso können die Windungen derart ausgestaltet werden, dass sie sich den Flächenschwerpunkten bzw. Zentren jeweils mindestens abschnittsweise in Abweichung einer geraden geometrischen Form (bspw. reines Rechteck oder Quadrat) annähern.

Nicht beansprucht ist weiterhin ein Verfahren zum kontaktlosen Übertragen von Energie bereit. Hierbei werden Spulen derart angeordnet oder dimensioniert, dass die jeweils paarweise elektromagnetische Kopplung zwischen allen möglichen Spulenpaaren minimiert wird.

KURZE BESCHREIBUNG DER FIGUREN

Weitere Aspekte und Merkmale der Erfindung ergeben sich aus der nachfolgenden Beschreibung der bevorzugten Ausführungsbeispiele der Erfindung unter Bezugnahme auf die Figuren, wobei

- Fig. 1 eine perspektivische Darstellung eines Ausführungsbeispiels der Erfindung zeigt,

- Fig. 2A bis Fig. 2C die Minimierung der Gegeninduktivität zweier Spulen illustriert,

- Fig. 3 ein vereinfachtes Diagramm darstellt, in dem der Betrag der Gegenkopplung als Funktion der seitlichen Verschiebung der in den Fig. 2A bis 2C gezeigten Spulen angibt,

- Fig. 4A bis Fig. 4C drei Ansichten des Ausführungsbeispiels aus Fig. 1 der Erfindung zeigt,

- Fig. 5A bis Fig. 5E weitere Ausführungsbeispiele der Erfindung zeigt,

- Fig. 6A eine perspektivische Darstellung eines Beispiels in wabenartiger Struktur ist,

- Fig. 6B bis Fig. 6K weitere Beispiele von wabenartigen Strukturen angeben,

- Fig. 7A bis Fig. 7D weitere Ausführungsbeispiele für schachbrettartige Strukturen darstellen,

- Fig. 7E und Fig. 7F ein weiteres Beispiel für eine wabenartige Struktur darstellen, und

- Fig. 8A und Fig. 8B ein weiteres Ausführungsbeispiel der Erfindung zeigen.

DETAILLIERTE BESCHREIBUNG DER BEVORZUGTEN

AUSFÜHRUNGSBEISPIELE

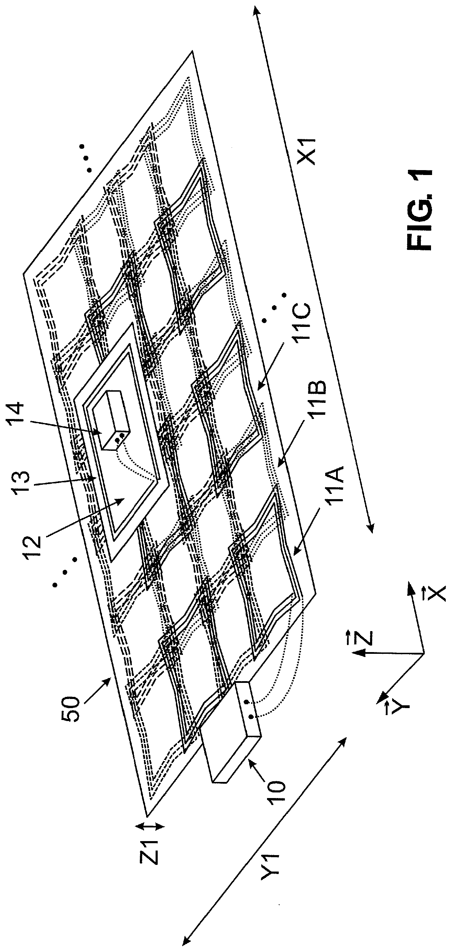

Fig. 1 ist eine perspektivische Darstellung eines ersten Ausführungsbeispiels der Erfindung. Dargestellt ist eine erfindungsgemäße kopplungsminimierte Matrix aus Sendespulen 11A, 11B, 11C, ... zur induktiven Energieübertragung. Die flächige Lage bzw. planare Einheit 50 wird von einer planaren Sendeeinheit gebildet, die aus den Sendespulen 11A, 11B, 11C, etc. und einer Stromversorgung 10 besteht, die mit allen Sendespulen (nur für Spule 11A dargestellt) verbunden ist. Die Geometrie der Sendespulen ist erfindungsgemäß derart optimiert, dass die gegenseitige elektromagnetische Kopplung aller Sendespulen untereinander minimiert ist. Dies ermöglicht eine individuelle Auslegung und Ansteuerung der einzelnen Sendespulen. Ein exemplarisch dargestellter Empfänger 12 ist mit einer Empfangsspule 13 ausgestattet, die mit einer Empfangseinheit 14 verbunden ist. Ziel dieser Anordnung ist die optimierte induktive (kontakt- oder drahtlose) Übertragung von Energie aus der planaren Einheit 50 an den Empfänger 12. Dabei ist die Position des Empfängers 12 auf der planaren Einheit 50 unerheblich (weitestgehend unerheblich) für die in den Empfänger bzw. die Empfangsspule 13 eingekoppelte Energie. Dies kann einerseits dadurch gewährleistet werden, dass jeweils nur die der Empfangseinheit am nächsten positionierte bzw. positionierten Sendespule bzw. Sendespulen aktiviert werden und andererseits durch die gleichzeitig hohe Packungsdichte (keine Region auf der planaren Einheit 50 ohne Sendespulen) und individuelle Ansteuerungsmöglichkeit (sowohl einzeln als auch beliebig gemeinsame Nachbarn) der Sendespulen ohne dass diese sich gegenseitig (negativ) beeinflussen.

Die planare Einheit 50 erstreckt sich in einer Dimension X, einer zweiten Dimension Y und einer dritten Dimension Z. Die Ausdehnung in der ersten Dimension (Länge) ist X1. Die Ausdehnung der planaren Einheit 50 in der zweiten Dimension ist Y1. Die Ausdehnung in der dritten Dimension ist Z1. Die Ausdehnung in der ersten Dimension (X-Richtung) und in der zweiten Dimension (Y-Richtung) ist deutlich größer als in der dritten Dimension (Z-Richtung). Es gilt X1, Y1 >> Z1. Die Ausdehnung in der dritten Dimension ergibt sich im Wesentlichen durch die Anzahl der Windungen der Spule, die paarweise Überlappung der Spulen und gegebenenfalls weitere materialspezifische Größen, die auch durch das die Spulen umschließende Material vorgegeben sein können. Insbesondere kommt die Anordnung der Spulen auf einer Leiterplatte (PRINTED CIRCUIT BOARD (PCB)) in Betracht.

Die erfindungsgemäße Anordnung berücksichtigt die Koppelfaktoren zwischen jeweils zwei Sendespulen. Mit jedem sich zeitlich ändernden Stromfluss in einer beliebigen Sendespule wird allgemein in allen anderen Sendespulen eine elektrische Spannung induziert. Dies kann nachteilig sein, wenn mehrere benachbarte Sendespulen an der Energieübertragung beteiligt sind, da diese gegenseitig ineinander einkoppeln und sich folglich stören können. Dieser Nachteil wird erfindungsgemäß ausgeräumt bzw. minimiert. Die erfindungsgemäße Anordnung ist vor allem bei einer hohen Packungsdichte von Sendespulen nützlich. Die geometrieoptimierten Sendespulen weisen eine minimale gegenseitige Kopplung aller Sendespulen untereinander auf. Hierdurch können die Sendespulen der Matrix beliebig separat oder auch gemeinsam geschaltet werden, ohne dass sie sich gegenseitig signifikant beeinflussen.

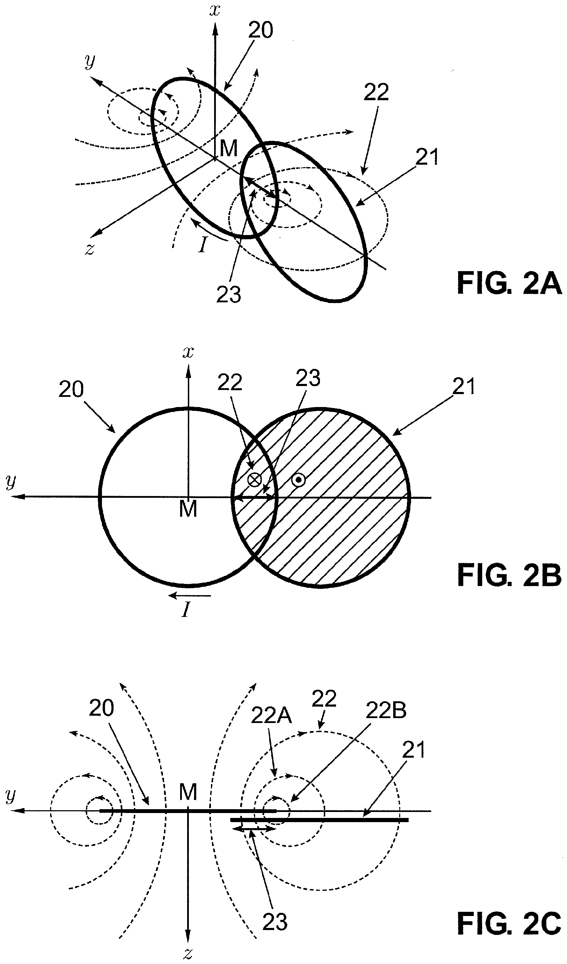

Anhand der Fig. 2A bis 2C wird nachfolgend exemplarisch der Zusammenhang zwischen Überlappung der Spulen und der Kopplung der Spulen für zwei kreisrunde Spulen beschrieben. Die Figuren zeigen zwei voneinander signifikant entkoppelte kreisförmige Leiterschleifen bzw. Spulen 20, 21, die aus verschiedenen Perspektiven dargestellt sind. Die beiden Leiterschleifen 20 und 21 sind seitlich verschoben voneinander angeordnet, sodass sie sich um die Länge 23 überlappen. Die Leiterschleife 20 wird vom Strom I durchflossen. Einige daraus resultierende magnetische Feldlinien der Spule 20 sind durch die gestrichelten Linien 22 skizziert. Anhand der Feldlinien bzw. der Form der Feldlinien 22 kann der Fachmann die Art der Richtungsabhängigkeit der magnetischen Feldlinien erkennen, je nachdem, ob sich die Feldlinien im Zentrum M oder außerhalb der Spule 20 befinden. Eine Möglichkeit, die Kopplung beider Spulen anschaulich zu beschreiben, besteht in der Definition der Gegeninduktivität beider Spulen, die über den Fluss der Feldlinien über der von der Spule 21 umrandeten Fläche ausgedrückt werden kann (schraffierte Fläche in Fig. 2B). Bei einer bestimmten Verschiebung 23 beider Spulen gegeneinander superponieren sich die teilweise gegenläufig gerichteten Feldlinien 22, 22A und 22B über der Fläche der Spule 21 derart, dass der Gesamtfluss und damit die Kopplung signifikant gegen 0 geht. Die spezielle Verschiebung, bei der die beiden Spulen substanziell elektromagnetisch entkoppelt sind, hängt von vielen Parametern wie zum Beispiel Materialeigenschaften, Spulengröße und Form, Lagenabstand etc. ab und kann beispielsweise messtechnisch oder simulatorisch bestimmt werden. In Fig. 2C ist zusätzlich zu erkennen, dass die beiden Spulen gegeneinander versetzt angeordnet und elektrisch voneinander getrennt sind. Dies kann beispielsweise dadurch erreicht werden, dass sie auf unterschiedlichen Lagen einer Leiterplatte aufgebracht sein können.

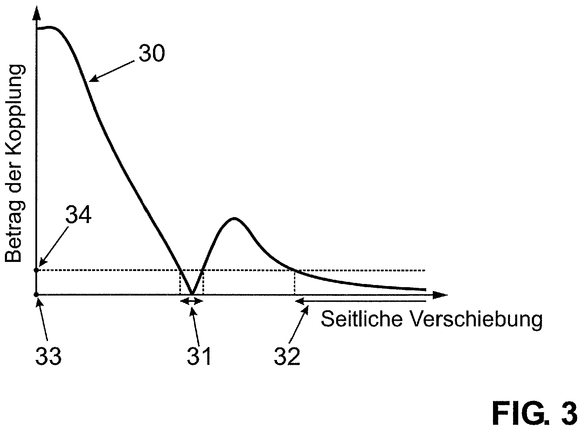

Fig. 3 ist ein Diagramm, in dem der Betrag der Gegenkopplung gegenüber der seitlichen Verschiebung dargestellt ist. Fig. 3 zeigt einen möglichen Verlauf der elektromagnetischen Kopplung zweier variabel seitlich verschobener paralleler Spulen, wie sie beispielsweise in den Fig. 2A bis 2C anhand partieller Überlappung der Spulen dargestellt ist. Der Koordinatenursprung 33 stellt auf der Ordinate die betragsmäßige Kopplung von 0 und auf der Abszisse eine Zentrierung der beiden Spulen dar. Während der exakte Kurvenverlauf 30 von verschiedenen Parametereinstellungen wie beispielsweise der Größe und Form der beiden Spulen oder auch den verwendeten Materialien abhängt, sind zwei wesentliche Eigenschaften charakteristisch. Zum einen durchläuft die Kopplung bei einer bestimmten seitlichen Verschiebung 31 einen Vorzeichenwechsel. Zum andern wird die Kopplung für größer werdende Abstände (große seitliche Verschiebungen) immer kleiner. Vom Vorzeichenwechsel der Kopplung kann sich der Fachmann leicht überzeugen, indem die Definition der Gegeninduktivität (wesentlich für die Kopplung) über das Flächenintegral des magnetischen Flusses zugrunde gelegt wird. Bei einer bestimmten Verschiebung 31 kompensieren sich die gegenläufigen Flussanteile, wie in den Fig. 2A bis 2C veranschaulicht ist. Durch diese Technik kann somit eine weitgehende Entkopplung beider Spulen erreicht werden. Im Kontext der vorliegenden Erfindung bedeutet dies, dass die Kopplung eine gewisse Mindestgrenze oder einen kritischen Wert 34 unterschreitet. Dies gelingt dann, wenn die seitliche Verschiebung entweder im Bereich 31 oder im Bereich 32 liegt. Diese beiden Bereiche werden für verschiedene Spulenkonfigurationen und Spulengeometrien gemäß der vorliegenden Erfindung vorteilhaft ausgenutzt.

Erfindungsgemäß werden somit eine Vielzahl von Spulen auf einer planaren Einheit bzw. flächigen Lage derart entworfen, dimensioniert und angeordnet, dass alle Spulen untereinander bzw. jedes beliebige Paar von Spulen eine minimale gegenseitige Kopplung besitzt. Im speziellen liegt diese paarweise Kopplung k jeweils unterhalb eines kritischen Wertes, der beispielsweise gleich oder kleiner 5%, gleich oder kleiner 2 % oder gleich oder keiner 1 % sein kann. Somit ruft ein sich zeitlich ändernder Stromfluss in einer beliebigen Sendespule keine signifikanten induzierten Spannungen in allen anderen Sendespulen hervor. Durch die paarweise Minimierung der Kopplung werden gleichzeitig alle Spulen substanziell voneinander entkoppelt. Mögliche Anwendungen bestehen beispielsweise in RFID Systemen oder generell bei induktiven Energieübertragungssystemen. Hierbei kann die Anordnung vorteilhaft zum Aufladen mobiler Geräte verwendet werden. In anderen Anwendungen können die Aspekte der Erfindung vorteilhaft für schaltbare Sendespulen in induktiven Energieübertragungssystemen eingesetzt werden.

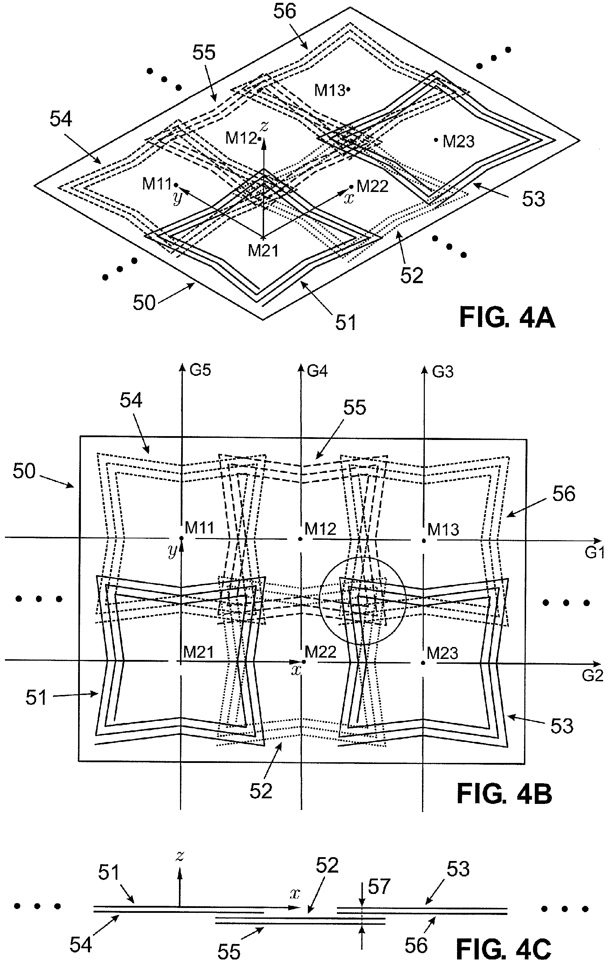

Die Fig. 4A bis 4C sind Darstellungen eines Ausführungsbeispiels der Erfindung. Die planare Einheit 50 weist in diesem Ausführungsbeispiel sechs Spulen 51, 52, 53, 54, 55 und 56 auf, die schachbrettartig angeordnet sind. Die Spulen sind erfindungsgemäß jeweils paarweise und dadurch insgesamt signifikant entkoppelt. Die Spulen sind beispielhaft spiralförmig und weisen drei Windungen auf. Jeweils zwei direkt benachbarte Sendespulen, beispielsweise die Spulen 51 und 52, sind auf unterschiedlichen Lagen der planaren Einheit angeordnet. Die planare Einheit muss daher mindestens eine Dicke 57 aufweisen. In X-Richtung und in Y-Richtung sind die Spulen derart überlappend angeordnet, dass sich eine substanzielle elektromagnetische Entkopplung entsprechend den Aspekten der Erfindung ergibt. Ebenso sind auch jeweils zwei diagonal benachbart liegende Spulen, beispielsweise die Spulen 51 und 55, mit einer partiellen Überlappung angeordnet. Hierdurch wird ebenfalls die paarweise Entkopplung von diagonal (auch unmittelbar) benachbarten Spulen erreicht. Damit die substanzielle Entkopplung sowohl bei zwei direkt benachbarten Spulen als auch zwei diagonal benachbarten Spulen gewährleistet werden kann, sind die Spulen nicht in einer einfachen rechteckigen Form ausgebildet. Hierdurch wird erreicht, dass nicht nur seitlich benachbarte Spulen, sondern auch diagonal benachbarte Spulen bezüglich der paarweisen überlappenden Flächen (Schnittfläche der von den Windungen der Spule umschlossenen Fläche eines Paares von Spulen) derart ausgelegt sind, dass sich eine substanzielle Entkopplung des jeweiligen Spulenpaares ergibt. In Abweichung von einer einfachen rechteckigen Form sind die Ecken der Spulen stärker ausgeprägt, bzw. die Seitenkanten sind nach innen eingebuchtet, wodurch sich eine leicht sternförmige Grundform der einzelnen Spulen ergibt. Die Kopplung zwischen zwei Spulen, die keine direkten Nachbarn sind, beispielsweise die Spulen 51 und 53, sind bereits räumlich so weit voneinander entfernt, dass die Kopplung bereits ohne weitere Maßnahmen unterhalb der kritischen Grenze im Bereich 32 der Fig. 3 liegt. In Fig. 4C ist in der frontalen Ansicht dargestellt, wie sich die teilweise überlappenden Spulen beispielsweise in vier unterschiedlichen Lagen der planaren Einheit anordnen lassen. In dem kreisförmig umrandeten Bereich in Fig. 4B überlappen sich alle benachbarten Spulen.

Exemplarisch sind ebenfalls die Mittelpunkte M11 bis M23 der Spulen 51 bis 56 eingetragen. Die Mittelpunkte M11 bis M23 können die Flächenschwerpunkte der von den Windungen der Spulen umschlossenen Fläche darstellen. Hierbei ist nicht von einer allzu strengen mathematischen Geometrie auszugehen. Vielmehr geht es um die Definition eines Mittelpunkts zur vereinfachten Beschreibung der Anordnung der Spulen. Die schachbrettartige Anordnung ist dann dadurch gekennzeichnet, dass die so definierten Mittelpunkte M11 bis M23 der Spulen in Zeilen bzw. Spalten einer regelmäßigen Matrix liegen. Hilfsweise kann dies auch dadurch beschrieben werden, dass die Mittelpunkte M11, M12 und M13 auf einer Geraden G1 liegen und die Mittelpunkte M21, M22 und M23 auf einer weiteren Geraden G2 liegen, wobei die Geraden G1 und G2 parallel sind. Ebenso liegen die Mittelpunkte M11 und M21 auf einer Geraden G5, die Mittelpunkte M22, M12 auf einer Geraden G4 und die Mittelpunkte M23 und M13 auf einer Geraden G3. Die Geraden G3, G4 und G5 sind ebenfalls parallel zueinander. Die Geraden G3, G4 und G5 können dann als Geraden der Spalten oder auch die Spalten der Matrix bezeichnet werden, während die Geraden G1 und G2 die Zeilen der Matrix bilden.

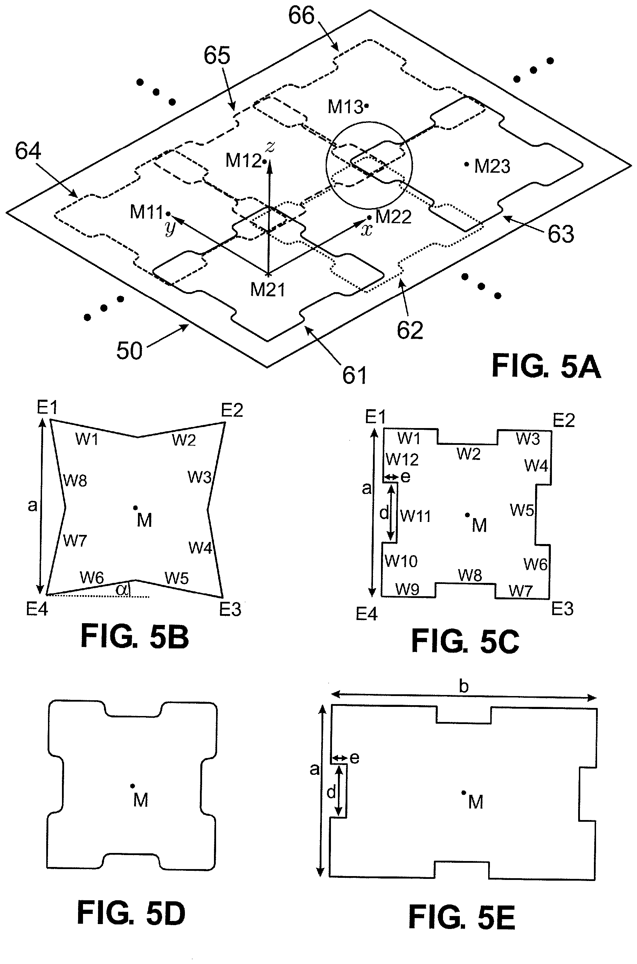

Die Daten für das Ausführungsbeispiel der Figuren 4A bis 4C sind wie folgt:
Die Anzahl der Windungen jeder Spule beträgt drei. Der Abstand zwischen den Mittelpunkten der Spulen in x- und y-Richtung beträgt 30 mm. Die Seitenlänge a der äußeren Windung jeder Spule (quadratisch) ist 42,84 mm (optimiert). Die Einbuchtung in Richtung des Mittelpunktes wird durch den Winkel $\alpha = 7,57°$ (optimiert) charakterisiert (Die Seitenlänge a und der Winkel $\alpha$ sind in FIG. 5B visualisiert). Die Dicke (Ausdehnung in Z-Richtung) der planaren Einheit (57 aus FIG. 4C) ist 1,5 mm. Weitere Werte, die nicht unmittelbar relevant sind, sind die Breite der Leiterbahnen, die 1 mm beträgt und der Abstand zwischen zwei Leiterbahnen, der ebenfalls 1 mm beträgt.

Die Überlappung ergibt sich dann aus dem Abstand der Mittelpunkte und Größe des Quadrates, je nach Berechnung beispielsweise zu (42,84 mm-30 mm) / 42,84 mm = 30 %.

Der angegebene maximale Kopplungswert ist das betragsmäßige Maximum aller möglichen paarweisen Kopplungen. Im Ausführungsbeispiel aus FIG. 4, sind die einzelnen Kopplungen aller 6 Spulen beispielsweise:

$$k =$$

$$
\begin{array}{cccccc}
0 & 0.0101 & -0.0093 & -0.0130 & -0.0133 & -0.0064 \\
0.0101 & 0 & 0.0101 & -0.0129 & -0.0130 & -0.0134 \\
-0.0093 & 0.0101 & 0 & -0.0070 & -0.0129 & -0.0130 \\
-0.0130 & -0.0129 & -0.0070 & 0 & 0.0117 & -0.0093 \\
-0.0133 & -0.0130 & -0.0129 & 0.0117 & 0 & 0.0117 \\
-0.0064 & -0.0134 & -0.0130 & -0.0093 & 0.0117 & 0
\end{array}
$$

Man sieht, dass das absolute betragsmäßige Maximum zwischen der Spule 2 und 6 (Zeile 2, Spalte 6) mit 0,0134 = 1,34 % liegt (die Matrix ist symmetrisch, die Hauptdiagonaleinträge sind hier Null, da eine Spule in dieser Definition der Kopplung nicht mit sich selbst koppelt, bzw. wird dies bereits in der Eigeninduktivität berücksichtigt). Die Spulen 2 und 6 sind in dem Beispiel aus FIG. 4 die Spulen 52 und 56, also zwei diagonal benachbarte Spulen.

Die Daten des Ausführungsbeispieles der Figuren 4A bis 4C sind innerhalb typischer Maße und Materialien gewählt. Für eine Integration der planaren Einheit in alltägliche Objekte wie Tische, Wände, Böden, Schalen etc. ist es vorteilhaft, die Ausdehnungen der einzelnen Sendespulen mit Seitenlängen bzw. Durchmessern von wenigen Millimetern bis hin zu wenigen Metern zu wählen. Nach unten (kleiner werdende Spulengröße) sind theoretisch keine Grenzen gesetzt, allerdings steigt der Aufwand insbesondere der Herstellung sowie der Ansteuerungselektronik mit kleiner werdenden Spulen, da mehr Spulen bei gleichen Gesamtmaßen der planaren Einheit benötigt werden. Nach oben (größer werdende Spulengröße) ist eine physikalische Grenze vorhanden, da bei fester Frequenz die Ausdehnung einer immer größer werdenden Spule irgendwann in die Größenordnung der Wellenlänge kommt und die Spule dann nicht mehr als eine solche fungiert (Eigenresonanz, kapazitive Einflüsse, Abstrahlung, etc.). Bei Frequenzen im niedrigen MHz Bereich kann diese Obergrenze beispielsweise wenige bis einige Meter betragen. Eine sinnvolle Anzahl der Windungen für die Sendespulen hängt ebenfalls von vielen Faktoren ab und nimmt typischerweise mit steigender Frequenz ab. Bezüglich der Leiterbahnstärken bzw. Drahtdurchmessern sind Werte vom Mikrometer- bis zum Millimeterbereich vorzuziehen, wobei sich generell größere Leiterbahnquerschnitte positiv hinsichtlich der Spulengüte und des Wirkungsgrades durch geringere Ohmsche Verluste auswirken. Allerdings können auch hier frequenzabhängige Effekte wie Skin- oder Proximity-Effekte auf die optimale Wahl der Leiterbahnquerschnitte Einfluss nehmen.

Die Fig. 5A bis 5E zeigen weitere Ausführungsbeispiele der Erfindung. Wieder ist die planare Einheit 50 bzw. flächige Lage mit mehreren entkoppelten Sendespulen dargestellt. In Fig. 5A ist eine im Vergleich zu Fig. 4A andere Spulengrundform verwendet worden, die es ebenfalls erlaubt, alle Kopplungen unterhalb eines kritischen Wertes zu erzielen, sodass alle Spulen jeweils als substanziell voneinander entkoppelt betrachtet werden können. In Fig. 5A ist die Ausprägung der Spulenfläche an den vier Ecken, die für die Entkopplung zu den diagonal benachbarten Spulen benötigt wird, nicht wie in Fig. 4A durch eine sternförmige Erweiterung realisiert, sondern vielmehr durch eine rechtwinklige Verringerung der Fläche an den vier Seitenkanten. Die Grundformen der einzelnen Spulen, beispielsweise 61, sind nur als schematisch zu verstehen. Es können auch spiral- und/oder helixförmige Spulen mit mehreren Windungen auf unterschiedlichen Lagen verwendet werden. In Fig. 5B, Fig. 5C, Fig. 5D und Fig. 5E sind nochmals die unterschiedlichen Basisstrukturen dargestellt. Neben der sternförmigen Struktur in Fig. 5B, die auch in Fig. 4A verwendet wird und der in Fig. 5A dargestellten rechtwinkligen Variante auf Fig. 5C können auch Spulengeometrien verwendet werden, die beispielsweise abgerundete Ecken enthalten, wie dies in Fig. 5D dargestellt ist. Dies ist auch für die sternförmige Struktur der Fig. 5B möglich. Weiterhin ist es möglich, die Basisstrukturen in die beiden Raumrichtungen der planaren Einheit (X und Y) asymmetrisch auszulegen, wie dies beispielsweise in Fig. 5E dargestellt ist.

Auch bei diesem Ausführungsbeispiel befinden sich die Spulen 61 bis 66 in der planaren Einheit 50 und sind im Wesentlichen in der X-Y-Ebene angeordnet. Die Ausdehnung in Z-Richtung wird durch die Überlappung und weitere Faktoren, wie Windungszahl, Materialien etc. vorgegeben.

Die in Fig. 5B dargestellte Spulenform, die als ansatzweise sternförmig beschrieben werden kann, kann durch zwei Parameter charakterisiert werden. Zum einen die Seitenlänge a sowie den Neigungswinkel a. Durch Optimierung dieser beiden Größen und eine entsprechende Anordnung in der planaren Fläche lässt sich die Gegenkopplung zwischen paarweise unmittelbar nebeneinander angeordneten Spulen (also auch diagonal) einfach optimieren. Entscheidend ist, dass eine Abweichung von der quadratischen Form vorliegt, die hier durch den Winkel $\alpha$ (Neigung der Windung zum Zentrum M der Spule hin) charakterisiert wird, und zwar stärker als die geradlinige Verbindung zwischen den Eckpunkten E1, E2 und E2, E3 oder E3, E4 bzw. E4, E1. Die Spule weist Abschnitte W1 bis W8 auf. Die Abschnitte W1 und W2 verbinden die benachbarten Eckpunkte E1 und E2. Die Eckpunkte E1 bis E4 liegen auf den Eckpunkten eines Quadrats. Die Streckenabschnitte W1 und W2 weichen von einer geraden Verbindung der beiden Eckpunkte E1 und E2 insofern ab, als sie sich mit einem Winkel $\alpha$ auf das Zentrum M der Anordnung zu bewegen. Hierdurch wird eine Einbuchtung der Spule an allen vier Seiten erreicht.

In Fig. 5C ist ein weiteres Ausführungsbeispiel der Erfindung dargestellt. Die Eckpunkte E1 bis E4 dieser geometrischen Spulenausgestaltung liegen ebenfalls auf den Eckpunkten eines Quadrats. Die erfindungsgemäße Einbuchtung wird hier durch einen rechtwinklig abgewinkelten Verlauf zum Zentrum M der Spule hin erreicht. Sie wird beispielsweise zwischen den Eckpunkten E4 und E1 zunächst auf einem Leitungsabschnitt W10 geradlinig verlaufen. Sodann knickt die Windung rechtwinklig zum Zentrum M hin auf einer Länge e ab. Auf einer Länge d im Leitungsabschnitt W11 verläuft die Windung dann wieder geradlinig, um schließlich rechtwinklig vom Zentrum M auf einer Länge e zum Streckenabschnitt W12 abzubiegen und schließlich geradlinig im Streckenabschnitt W12 bis zum Eckpunkt E1 zu verlaufen. Eine Optimierung dieser Spulengeometrie ist dadurch möglich, dass die Parameter a, d und e verändert werden, bis eine minimale Gegenkopplung zwischen allen direkt benachbarten Spulen (auch zwischen diagonal benachbarten Spulen) erreicht ist.

Ebenso kann die Spulengeometrie, die in Fig. 5E dargestellt ist, optimiert werden. Hierbei ist zu berücksichtigen, dass die Eckpunkte dieser Spulenform auf den Eckpunkten eines Rechtecks liegen. Dieses Rechteck hat die Seitenlängen a und b. Die Einbuchtung ist wiederum durch ihre Länge d und ihre Tiefe e gekennzeichnet. Zu optimieren wären in diesem Fall a, b, d und e. Vereinfachend kann hier das Verhältnis V = a/b vorgegeben und anschließend a, d und e optimiert werden. Somit wären auch hier lediglich drei Parameter zu optimieren. Für den Fall der Fig. 5B sind die Parameter a und $\alpha$ (also zwei Parameter) und für den Fall der Fig. 5C die Parameter a, d und e (also drei Parameter) zu optimieren. Außerdem ist natürlich jeweils die Lage der Spulen zueinander zu berücksichtigen.

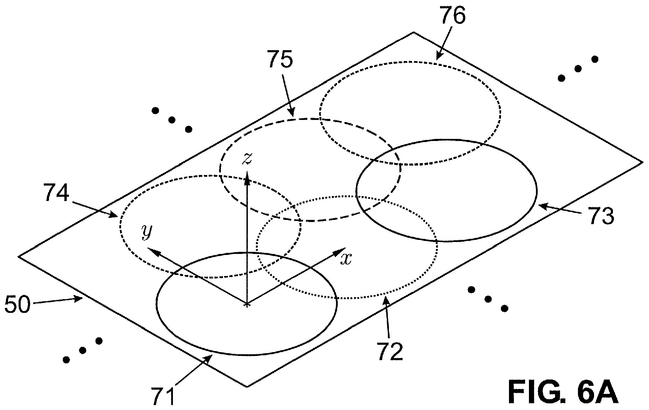

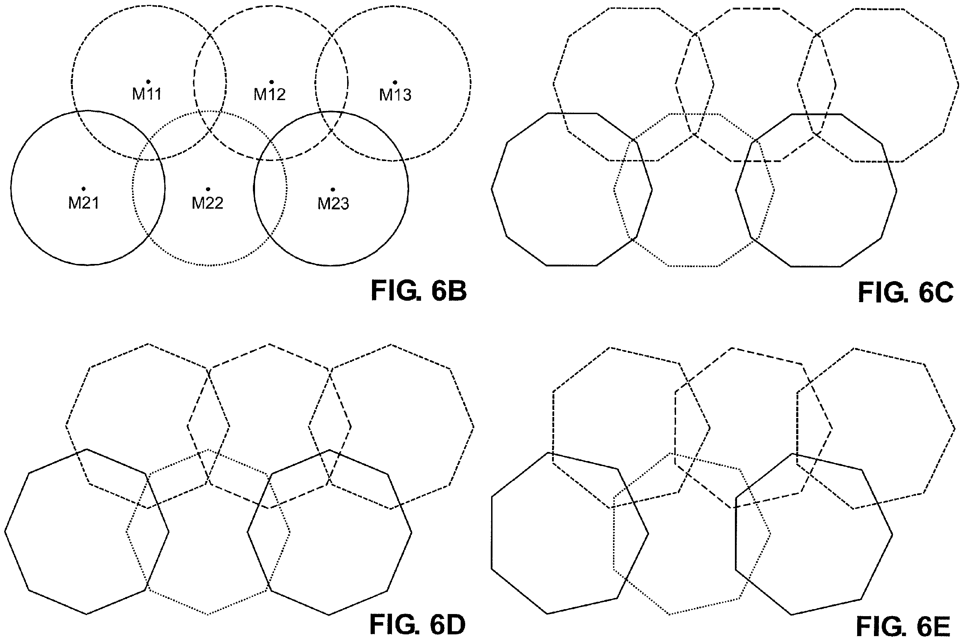

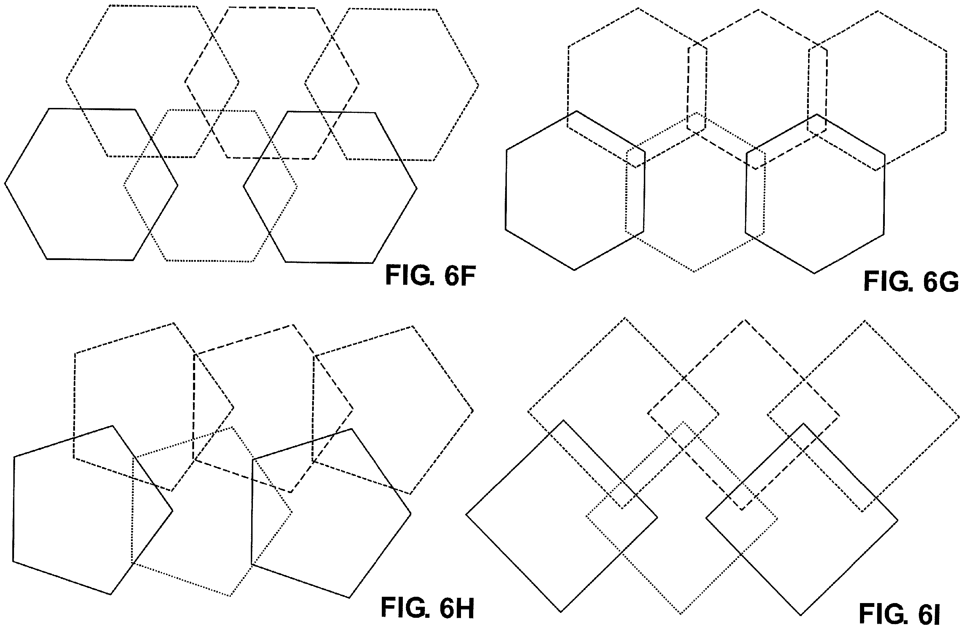

Fig. 6A zeigt ein weiteres Beispiel. Hierbei handelt es sich um eine wabenartige Anordnung der Spulen. Bei einer wabenartigen Anordnung der Spulen innerhalb der planaren Einheit 50 kann auf die zuvor beschriebenen sternförmigen bzw. eckigen Einbuchtungen gemäß den Fig. 5B bzw. 5C verzichtet werden. Hierbei werden die jeweils direkt benachbarten Spulen (beispielsweise 71 und 72), also die Spulen innerhalb einer Zeile oder die Spulen innerhalb einer Spalte der Matrix substanziell voneinander entkoppelt. Auf die Entkopplung der diagonal benachbarten Spulen muss jedoch teilweise verzichtet werden. Die maximal acht benachbarten Spulen einer ausgewählten Spule in der Matrixstruktur (direkt und diagonal) sind durch die nicht-rechtwinklige Anordnung der Zeilen und Spalten in der Wabenstruktur derart verzerrt, dass zwei der diagonal benachbarten Spulen weiter voneinander entfernt sind und somit nicht mehr durch partielle Überlappung entkoppelt werden können bzw. müssen. Dies trifft beispielsweise auf die Spulen 71 und 75 zu. Gemäß einem Ausführungsbeispiel der Erfindung können partiell überlappende rechteckige Spulen, polygone oder auch runde Spulen verwendet werden. Die gezeigte Anordnung ist bereits vorteilhaft gegenüber Spulenanordnungen, die völlig ohne signifikante Entkopplung der benachbarten Spulen arbeiten. Nachteilig ist jedoch, dass die volle Entkopplung, wie sie gemäß den Ausführungsbeispielen der Fig. 4A und 5A möglich ist, zurückbleibt, da die diagonal im schachbrettartigen System liegenden Spulen (beispielsweise Spulen 71 und 75) sich durch eine vorhandene Restkopplung negativ beeinflussen können. Gegenüber der schachbrettartigen Anordnung kann es bei der wabenförmigen Anordnung jedoch als vorteilhaft gewertet werden, dass bei einer Optimierung der Spulengeometrie für die gegenseitige substanzielle Entkopplung nur die geometrische Größe (also ein Parameter) der Basisstruktur, beispielsweise der Radius im kreisförmigen Fall, berücksichtigt werden muss, wenn beispielsweise das Raster der Mittelpunkte der Spulen vorgegeben ist.

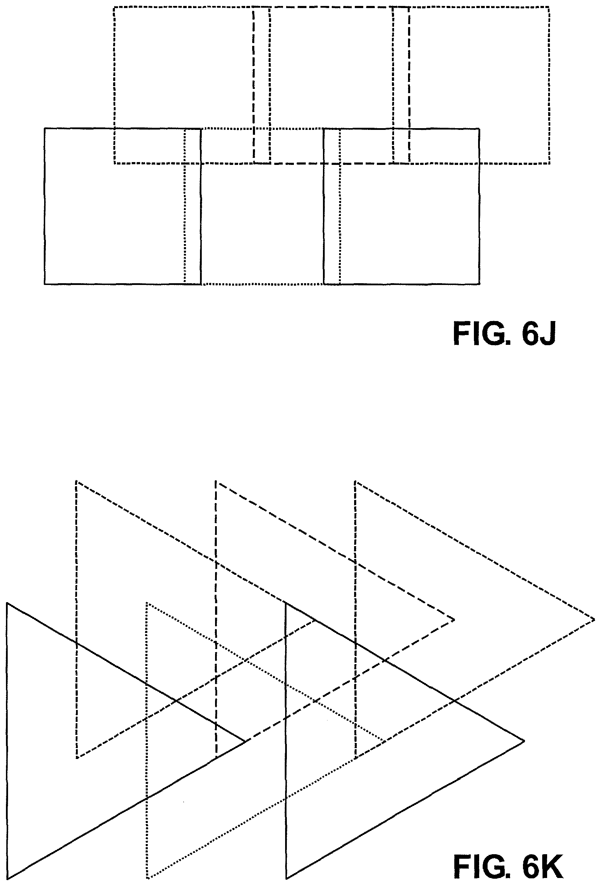

Weitere Ausgestaltungen für wabenartige Strukturen sind in den Fig. 6B bis 6K dargestellt. Fig. 6B zeigt eine wabenartige Struktur mit kreisförmigen Spulen. Die Fig. 6C bis 6H sind Polygone mit zehn Ecken, acht Ecken, sieben Ecken, sechs Ecken und fünf Ecken. Fig. 6I zeigt ein Ausführungsbeispiel mit Rechtecken genauso wie die Fig. 6J. Dabei können die Rechtecke gemäß den Fig. 6I und 6J auch um ihren Mittelpunkt gedreht sein. In allen Fällen überlappen sich mindestens die unmittelbar benachbarten Spulen. Fig. 6K ist ein Beispiel mit dreieckförmigen Spulen.

Bei dem in Fig. 6A gezeigten Beispiel sind zwei Reihen mit Spulen 71, 72, 73 (erste Reihe) und 74, 75, 76 (zweite Reihe) jeweils um die Hälfte des Abstands der Spulenmittelpunkte gegeneinander versetzt angeordnet. Die partielle Überlappung jeweils zweier benachbarter Spulen (zum Beispiel 71 und 72 oder 71 und 74) ist gerade so gewählt, dass die beiden Spulen als substanziell voneinander entkoppelt betrachtet werden können. Die nicht unmittelbar benachbarten Spulen, zum Beispiel 71 und 73 oder 71 und 76 (als Spezialfall auch 71 und 75), sind bereits so weit voneinander entfernt, dass eine kritische Kopplung unterschritten wird und diese beiden Spulen ebenfalls als substanziell voneinander entkoppelt betrachtet werden können, Fig. 6B zeigt die Spulen 71 bis 76 in der Draufsicht. Wie in den weiteren Fig. 6C bis 6K dargestellt ist, lassen sich derartige substanziell entkoppelte Spulen in einer wabenförmigen Struktur auch mithilfe von regelmäßigen Vielecken, insbesondere Drei-, Vier-, Fünf-, Sechs-, Sieben-, Acht-, Neun- und Zehnecken erreichen. Hierbei ist es nicht erforderlich, einen bestimmten Drehwinkel der Grundstruktur um den Mittelpunkt sicherzustellen. Mit anderen Worten kann die substanzielle Entkopplung zum Beispiel der Quadrate aus Fig. 6I auch dann erreicht werden, wenn die Quadrate in einem anderen Rotationswinkel, wie beispielsweise in Fig. 6J dargestellt, angeordnet sind. Dies ist in den Fig. 6F und 6G auch für den Fall von Sechsecken dargestellt. Für unterschiedliche Rotationswinkel kann sich jedoch unter Umständen die Größe der einzelnen Vielecke ändern (im Optimierungsprozess). Bei allen in den Fig. 6B bis 6K vorgeschlagenen Formen gilt wiederum, dass auch spiralförmige, mehrlagige oder auch gewickelte Spulen, insbesondere im kreisförmigen Fall, verwendet werden können. Zudem können auch Grundstrukturen mit Asymmetrien in beide Raumrichtungen der planaren Einheit vorgesehen werden (zum Bespiel eine Ellipse anstelle des Kreises aus Fig. 6B oder asymmetrische Abänderungen der Vielecke).

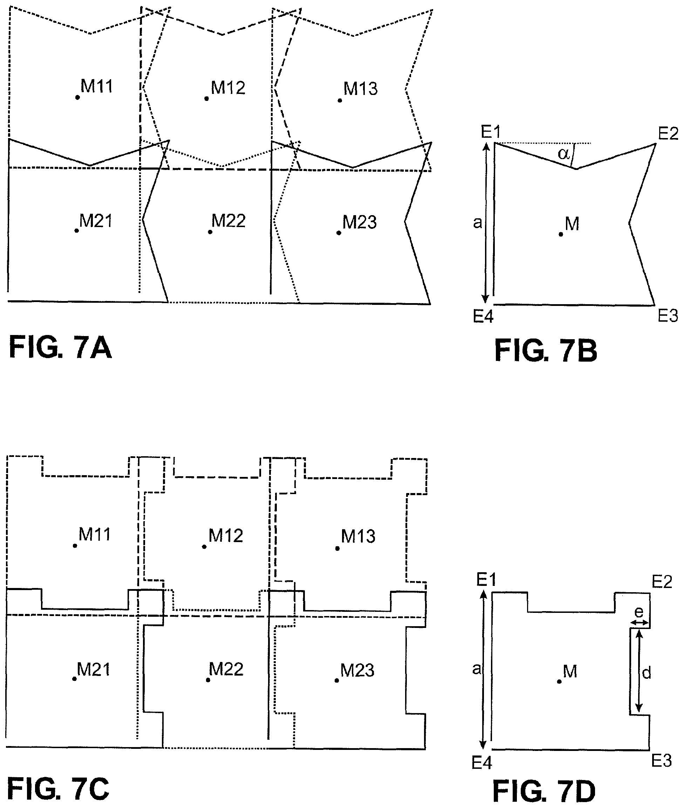

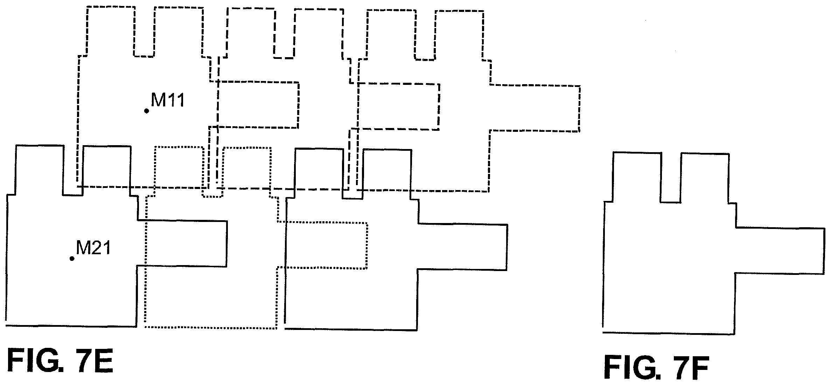

Die Fig. 7A bis 7D zeigen weitere Ausführungsbeispiele der Erfindung. In den Fig. 7A bis 7D sind Ausführungsbeispiele der Erfindung dargestellt, bei denen die Grundform der Sendespule asymmetrisch ist. So kann beispielsweise das Muster aus Fig. 7A mit der zugehörigen Basisspule aus Fig. 7B als Abwandlung des sternförmigen Musters aus Fig. 4 betrachtet werden. Weiterhin sind erfindungsgemäß aber alle Spulen durch die optimierte partielle Überlappung als substanziell voneinander entkoppelt angeordnet. Dementsprechend kann das Muster aus Fig. 7C mit der zugehörigen Basisspule aus Fig. 7D als Abwandlung des rechteckigen Musters aus Fig. 5A betrachtet werden, wobei weiterhin alle Spulen durch die optimierte partielle Überlappung als substanziell voneinander entkoppelt betrachtet werden können. Auch das Muster aus Fig. 7E mit der zugehörigen Basisspule aus Fig. 7F erlaubt durch die gezielte partielle Überlappung eine substanzielle Entkopplung aller Spulen. Dieses Muster ist eine asymmetrische Abwandlung der Wabenstruktur aus Fig. 6J, wobei diese Struktur beispielsweise mit einem zweilagigen Träger gefertigt werden kann. Bei dem Ausführungsbeispiel in Fig. 7A sind die Mittelpunkte der Spulen M11 bis M23 schachbrettartig angeordnet, Ebenso beim Ausführungsbeispiel in Fig. 7C. Bei dem Beispiel in Fig. 7E handelt es sich wiederum um eine Wabenstruktur.

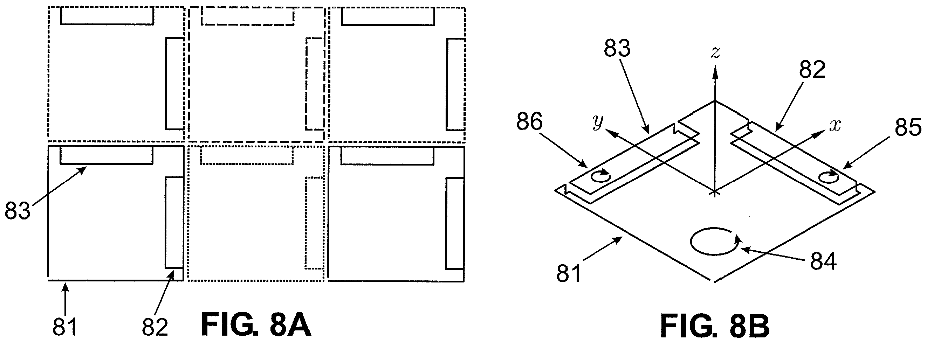

Fig. 8A und Fig. 8B zeigen ein weiteres Ausführungsbeispiel der Erfindung. Hierbei wird die substanzielle Entkopplung aller Sendespulen nicht durch eine partielle Überlappung der benachbarten Spulen erreicht, sondern dadurch, dass sich der Wicklungssinn der einzelnen Basisspulen, wie in Fig. 8A und Fig. 8B anhand der Spule 81 gezeigt, über der Basisspulenfläche ändert. Dies wird beispielsweise dadurch erreicht, dass beispielsweise zwei Bereiche 82 und 83 der Spule 81 mit entgegengesetztem Wicklungssinn hinzugefügt werden. Durch die gezielte Änderung des Wicklungssinnes innerhalb der Basisspule (vgl. Wicklungssinn 84 der Basisspule mit dem Wicklungssinn 85 bzw. 86 der Bereiche 82 bzw. 83) ändert sich auch die Richtung der resultierenden magnetischen Feldlinien. Die Gegeninduktivität und somit die Kopplung zweier benachbarter Spulen (direkt und gegebenenfalls diagonal) kann bei optimaler Geometrieauslegung signifikant minimiert werden. Hierdurch kann ebenfalls das Ziel der signifikanten Kopplungsreduzierung aller Sendespulen erfüllt werden. Bei diesem Ausführungsbeispiel bleibt anzumerken, dass unter Umständen die Kopplung der einzelnen Sendespulen zu einer bzw. mehreren möglicherweise vorhandenen Empfangsspulen durch die Änderung des Wicklungssinns reduziert werden kann und damit eine Verschlechterung des Gesamtsystemverhaltens einhergehen kann. Demgegenüber kann eine einfachere Herstellbarkeit der Spulenanordnung erreicht werden, da unter Umständen weniger Lagen der planaren Einheit in Anspruch genommen werden müssen.

Einer der maßgeblichen Vorteile der Erfindung liegt darin, dass sich zeitlich ändernde Stromflüsse in einer beliebigen Sendespule nur gering auf eine benachbarte Spule der Spulenmatrix auswirken. Dies ist insbesondere von Vorteil für solche Systeme, bei denen mehrere Sendeantennen individuell, also auch gleichzeitig, angesteuert werden und dadurch einen Stromfluss aufweisen. Generell ermöglicht die Erfindung eine hohe relative Packungsdichte der Sendespulen. Dadurch ist es möglich, Bereiche innerhalb der planaren Einheit bzw. flächigen Lage zu vermeiden, auf denen sich keine Spule befindet und somit eine Versorgung einer Empfangsspule möglicherweise an diesen Stellen nicht möglich wäre. Weiter lässt es sich als Vorteil werten, dass eine beliebige Skalierbarkeit der erfindungsgemäßen Anordnung möglich ist. Die planare Einheit kann also in beide Raumrichtungen (X und Y) theoretisch beliebig erweitert werden. Theoretisch sind dadurch beliebig viele Empfänger versorgbar. Des Weiteren lassen sich gemäß der vorliegenden Erfindung unterschiedliche Empfangsantennenformen nutzen, solange diese auf die Sendespulen abgestimmt sind. Insgesamt lassen sich zwei große Anwendungsfälle unterscheiden. Zum einen der Fall kleiner Sendeantennen und größerer Empfangsantennen und zum anderen der Fall von großen Sendeantennen und kleineren Empfangsantennen.

In diesem Zusammenhang wird der Begriff Antenne synonym für Spule verwendet. Für den speziellen Fall, dass immer nur eine einzelne Sendespule angesteuert wird, hat die Erfindung kaum Vorteile, da eine induzierte Spannung in einer deaktivierten bzw. aufgetrennten Nachbarspule keinen bzw. kaum einen Stromfluss nach sich zieht. Die Situation stellt sich allerdings dann anders dar, wenn mindestens zwei benachbarte Sendespulen gleichzeitig betrieben werden. Durch die gegenseitige Beeinflussung gekoppelter Sendeantennen ändert sich über die Gegeninduktivität die wirksame Eigeninduktivität der einzelnen Antenne bzw. Spule, was beispielsweise zur Folge haben kann, dass ein Resonanzkreis verstimmt wird und sich damit auch eine verminderte Effizienz ergibt. Gemäß den Aspekten der vorliegenden Erfindung sind die einzelnen Sendeantennen beliebig kombinierbar und bei phasensynchronisierter Ansteuerung zu beliebig geformten virtuell wirksamen Antennen formbar. Am Beispiel von sehr vielen kleinen Sendespulen, oberhalb derer eine größere Empfangsantenne platziert wird, kann durch verschiedene Zuschaltung der Sendeantennen die übertragene Leistung optimal eingestellt werden. Reicht beispielsweise die induzierte Spannung in einer Empfangsspule durch eine einzelne aktivierte Sendespule nicht aus, um den Empfänger mit genügend Leistung zu versorgen, kann eine zweite benachbarte Sendespule hinzugeschaltet werden. Damit erhöhen sich die induzierte Spannung und somit auch die übertragene Leistung. Die partiellen Überlappungen zweier benachbarter Spulen beinhalten ebenfalls den Vorteil, dass die beiden Spulen im Bereich der Überlappung die größten magnetischen Felder aufweisen, soweit beide Spulen aktiviert sind. Dieser Bereich ist typischerweise aber räumlich unterhalb der Empfangsspule positioniert und ist daher aus Gründen der Streufeldreduzierung als unkritisch bzw. sogar vorteilhaft zu werten.

Wenn mehrere große Sendeantennen unabhängig voneinander in der planaren Einheit räumlich nebeneinander betrieben werden, es also keine phasensynchronisierte Ansteuerung gibt, so lässt sich durch das vorgeschlagene Verfahren der substanziellen Entkopplung sicherstellen, dass sich beide Antennen gegenseitig nicht bzw. nur sehr wenig beeinflussen. Wäre dies nicht der Fall, würden also beide Spulen auf herkömmliche Weise örtlich nebeneinander betrieben, würden beide Spulen gegenseitig ineinander einkoppeln und die resultierenden Ströme könnten sich im schlimmsten Fall destruktiv überlagern. Dies ist bei der erfindungsgemäßen Anordnung und den erfindungsgemäßen Verfahren nicht der Fall. Hierbei kann durch die gezielte partielle Überlappung vielmehr der gesamte Bereich oberhalb der Sendespulen abgedeckt werden.

Die erfindungsgemäße flache Lage bzw. planare Einheit kann beispielsweise in Tische eingelassen oder an solchen angebracht werden, um mobile Geräte wie beispielsweise Smartphones, Laptops, Monitore, Lampen und vieles mehr mit elektrischer Leistung zu versorgen. Dies kann beispielsweise das Aufladen von Akkumulatoren beinhalten. Neben Tischen kann die planare Einheit beispielsweise auch in Böden oder Teppiche von Räumen integriert werden. Hierbei können ebenfalls mobile Geräte wie beispielsweise Staubsauger oder Stehlampen kontaktlos versorgt werden. Auch in Böden von Garagen oder außerhalb von Gebäuden, zum Beispiel auf öffentlichen Plätzen, können planare Einheiten integriert werden, um beispielsweise die Akkumulatoren von Elektroautos aufzuladen. Auch kleinere planare Einheiten können beispielsweise in Ladeschalen oder Schubladen integriert werden, um kleinere mobile Geräte, wie zum Beispiel Mobiltelefone, mit Strom zu versorgen. Auch an eine Integration der planaren Einheit in Wände kann gedacht werden, um beispielsweise digitale Bilderrahmen, Lampen, Fernseher und vieles mehr zu versorgen.

Eine weitere Anwendung der Erfindung kann im Bereich von RFID liegen. Bei diesem Anwendungsbeispiel kann die planare Einheit bzw. flächige Lage als eine multifunktionale RFID-Sendeantenne verwendet werden, wobei die magnetischen Felder durch die speziell eingestellten Phasen der alternierenden individuellen Sendeströme unterschiedlich geformt werden können. Dies kann beispielsweise dazu verwendet werden, um RFID-Etiketten, deren räumliche Ausrichtung nicht a priori festgelegt ist, zuverlässig auszulesen.

**Patentansprüche**

1.  Anordnung zur kontaktlosen Energieübertragung mittels Induktion, umfassend:

    eine Mehrzahl von mindestens vier Spulen (51, 52, 53, 54, 55, 56),
    wobei die Spulen (51, 52, 53, 54, 55, 56) mindestens einen Leiter aufweisen, der mindestens ein Mal eine zentrale Achse der jeweiligen Spule in einer Windung umschließt,
    wobei die Spulen (51, 52, 53, 54, 55, 56) nebeneinander und regelmäßig in einer planaren Einheit (50) angeordnet sind, die sich in einer ersten Dimension, einer zweiten Dimension und einer dritten Dimension erstreckt und die Erstreckung der planaren Einheit (50) in der ersten Dimension und in der zweiten Dimension wesentlich größer ist als in der dritten Dimension, und die Spulen (51, 52, 53, 54, 55, 56) außerdem innerhalb der planaren Einheit (50) derart regelmäßig in Zeilen und Spalten angeordnet sind, dass eine Spule mindestens jeweils drei unmittelbar benachbarte Spulen hat,
    und wobei die Spulen (51, 52, 53, 54, 55, 56) bei einer Draufsicht entlang der zentralen Achsen der Spulen matrixartig in Spalten und Zeilen nach Art eines Schachbrettmusters regelmäßig angeordnet sind,
    **dadurch gekennzeichnet, dass** sich die von der jeweils mindestens einen Windung jeder Spule aufgespannten Flächen bei jedem unmittelbar benachbarten Paar von Spulen überlappen, wobei die unmittelbar benachbarten Spulen diagonal benachbarte Spulen umfassen.

2.  Anordnung nach Anspruch 1,
    wobei sich der Wicklungssinn mindestens einer Spule abschnittsweise ändert.


**Claims**

1.  An arrangement for contactless energy transmission by means of induction, comprising:

    a plurality of at least four coils (51, 52, 53, 54, 55, 56),
    wherein the coils (51, 52, 53, 54, 55, 56) comprise at least one conductor that surrounds a central axis of the respective coil at least once in one turn,
    wherein the coils (51, 52, 53, 54, 55, 56) are arranged adjacent to one another and in a regular manner in a planar unit (50) that extends in a first dimension, in a second dimension, and in a third dimension, and the planar unit (50) has an extension in the first dimension and in the second dimension that are significantly greater than in the third dimension, and the coils (51, 52, 53, 54, 55, 56) are arranged in a regular manner within the planar unit (50) in rows and columns such that each coil has at least three immediately adjacent coils,
    and wherein, in a top view along the central axis of the coils,
    the coils (51, 52, 53, 54, 55, 56) are arranged in a regular matrix-like manner in rows and columns in a checkerboard-type pattern,
    **characterized in that**
    surfaces spanned by the at least one turn of each coil overlap in segments for each immediately adjacent pair of coils, wherein immediately adjacent coils comprise diagonally adjacent coils.

2.  The arrangement of claim 1, wherein the winding direction of at least one coil changes by segment.


**Revendications**

1.  Agencement pour une transmission d'énergie sans contact par induction, comprenant :

    une pluralité d'au moins quatre bobines (51, 52, 53, 54, 55, 56),
    dans lequel les bobines (51, 52, 53, 54, 55, 56) comprennent au moins un conducteur qui entoure au moins une fois un axe central de chaque bobine dans un enroulement,
    dans lequel les bobines (51, 52, 53, 54, 55, 56) sont juxtaposées et disposées de manière régulière dans une unité planaire (50), qui s'étend dans première dimension, une deuxième dimension et une troisième dimension et l'extension de l'unité planaire (50) dans la première dimension et dans la deuxième dimension est nettement plus grande que dans la troisième dimension, et les bobines (51, 52, 53, 54, 55, 56) sont en outre disposées, à l'intérieur de l'unité planaire (50) de manière régulière en lignes et colonnes, de façon à ce qu'une bobine ait au moins trois bobine immédiatement adjacentes,

et dans lequel les bobines (51, 52, 53, 54, 55, 56) sont disposées régulièrement, en vue de dessus le long de l'axe central des bobines, de manière matricielle en colonnes et lignes à la manière d'un échiquier, **caractérisé en ce que** les surfaces définies par l'au moins un enroulement de chaque bobine se superposent à chaque paire de bobine immédiatement adjacent, dans lequel les bobines immédiatement adjacentes comprennent des bobines adjacentes en diagonale.

2. Agencement selon la revendication 1,
dans lequel le sens d'enroulement d'au moins une bobine varie par sections.

FIG. 1

**FIG. 2A**

**FIG. 2B**

**FIG. 2C**

FIG. 3

FIG. 4A

FIG. 4B

FIG. 4C

**FIG. 5A**

**FIG. 5B**

**FIG. 5C**

**FIG. 5D**

**FIG. 5E**

FIG. 6A

FIG. 6C

FIG. 6B

FIG. 6E

FIG. 6D

**FIG. 6F**

**FIG. 6G**

**FIG. 6H**

**FIG. 6I**

EP 2 705 521 B1

**FIG. 6J**

**FIG. 6K**

**FIG. 7A**

**FIG. 7B**

**FIG. 7C**

**FIG. 7D**

FIG. 7E

FIG. 7F

EP 2 705 521 B1

**FIG. 8A**

**FIG. 8B**

EP 2 705 521 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080116847 A
- US 20030210106 A
- US 7633263 B
- US 20090303749 A
- US 20080278112 A
- US 20050189910 A
- US 7164255 B
- US 20070182367 A
- US 7262700 B
- US 7521890 B
- US 2009023719 A1

- US 20100314946 A
- US 20100328044 A
- US 20110025133 A
- US 7893568 B
- WO 2007031897 A1
- US 20110050382 A1
- WO 2008032746 A1
- US 2008067874 A1
- GB 2389720 A
- GB 2446305 A